# EUROPÄISCHE PATENTANMELDUNG

(11) **EP 1 002 762 A2**
(43) Veröffentlichungstag der Anmeldung: **24.05.2000**
(21) Anmeldenummer: 99121325.7
(22) Anmeldetag: 26.10.1999
(51) Int. Cl.: C01B 3/38, C01B 3/58

(54) **Anordnung zur Erzeugung eines wasserstoffhaltigen Gases**

(30) Priorität: 19.11.1998 DE 19853379
(71) Anmelder: DBB Fuel Cell Engines GmbH, 73230 Kirchheim/Teck-Nabern (DE)
(72) Erfinder: Benz, Uwe, 88690 Uhldingen-Mühlhof (DE); Boneberg, Stefan, 72660 Beuren (DE); Brauchle, Stefan, 88400 Biberach/Riss (DE); Georg, Dirk, 73230 Kirchheim/Nabern (DE); Schäfer, Martin, 73230 Kirchheim (DE); Schüssler, Martin, 89073 Ulm (DE); Wolfsteiner, Matthias, 91793 Alesheim (DE)
(74) Vertreter: Kocher, Klaus-Peter Dipl.-Phys

(57) **Zusammenfassung**

Die Erfindung betrifft eine Anordnung zur Erzeugung eines wasserstoffhaltigen Gases aus einem kohlenwasserstoffhaltigen Medium mit einer mehrstufigen, ein Reformat zur Verfügung stellenden Reformierungseinheit, welche mit einer mehrstufigen Kohlenmonoxid-Entfernungseinheit verbunden ist, wobei die Reformierungseinheit bzw. die Kohlenmonoxid-Entfernungseinheit jeweils in einer Gasströmungsrichtung vom kohlenwasserstoffhaltigen Medium bzw. vom Reformat durchströmt ist, wobei Stufen der Reformierungseinheit in aufsteigender Reihenfolge bezogen auf die Gasströmungsrichtung in der Reformierungseinheit mit Stufe der Kohlenmonoxid-Entfernungseinheit in absteigender Reihenfolge bezogen auf die Gasströmungsrichtung in der Kohlenmonoxid-Entfernungseinheit über je ein wärmeleitendes Trennmedium in Wärmekontakt stehen.

## Beschreibung

Die Erfindung betrifft eine Anordnung zur Erzeugung eines wasserstoffhaltigen Gases gemäß dem Oberbegriff des Anspruchs 1.

Anordnungen dieser Art sind beispielsweise als mobile Methanolreformierungsanlagen für brennstoffzellenbetriebene Kraftfahrzeuge bekannt, um den für die Brennstoffzellen benötigten Wasserstoff bereitzustellen. Für diese mobile Anwendung besteht ganz besonders die Anforderung, auf die typischen Lastwechsel im Fahrzeug rasch zu reagieren und von allem nach dem jeweiligen Systemstart möglichst rasch Wasserstoff für die Brennstoffzellen liefern zu können und dies mit einer relativ kompakt aufgebauten Reformierungsanlage zu erreichen.

Die Wasserdampfreformierungsreaktion zur Reformierung des verwendeten Kohlenwasserstoffs, wie z.B. Methanol, verläuft bekanntermaßen endotherm und erfolgt bei einer gegenüber der Raumtemperatur erhöhten Reaktionstemperatur. Bei einem Kaltstart der Reformierungsanlage kann daher mit der Wasserdampfreformierungsreaktion nicht sofort Wasserstoff bereitgestellt werden. Vielmehr müssen zunächst die Komponenten der Anlage auf eine entsprechende Betriebstemperatur gebracht werden. Gerade im Anwendungsfall brennstoffzellenbetriebener Kraftfahrzeuge besteht der Wunsch, den warmgelaufenen Normalbetrieb so schnell wie möglich zu erreichen, um die Brennstoffzellen möglichst frühzeitig mit im laufenden Fahrbetrieb erzeugten Wasserstoff speisen zu können.

Es wurden bereits verschiedentlich Maßnahmen für einen beschleunigten Kaltstart von Reformierungsanlagen vorgeschlagen.

So wird in der US-A-5,516,344 vorgeschlagen, den Reformer zusammen mit einem diesem nachgeschalteten Kohlenmonoxid-Shiftkonverter in einem gemeinsamen Bauteil zu integrieren, dem ein Brenner zugeordnet ist, der ein zugeführtes, brennbares Gemisch unter Entflammung verbrennt. Mit den heißen Verbrennungsabgasen werden dann unter anderem der Reformer und der Kohlenmonoxid-Shiftkonverter aufgeheizt.

In der gattungsbildenden, nicht vorveröffentlichten Anmeldung DE 197 54 012 wird das Problem gelöst, indem der Reformer und die Kohlenmonoxid-Entfernungseinheit jeweils mehrstufig ausgeführt sind und die Stufen von Reformer und Kohlenmonoxid-Entfernungseinheiten je eine Wärmeübertragerstruktur bilden. Die Kohlenmonoxid-Entfernungseinheit setzt sich dabei modular aus einer Kohlenmonoxid-Oxidationseinheit und aus einer Kohlenmonoxid-Shiftreaktionseinheit zusammen.

Trotz der erreichten Verbesserung in der Dynamik solcher Systeme ist eine weitere Erhöhung der Dynamik für schnelle Lastwechsel und eine große Lastspreizung bei mobilen Anwendungen wünschenswert, so daß es die Aufgabe der Erfindung ist, eine Anordnung zur Erzeugung eines wasserstoffhaltigen Gases aus einem kohlenwasserstoffhaltigen Medium anzugeben, bei der die vorgenannten Probleme verbessert werden.

Diese Aufgabe wird durch die Merkmale des unabhängigen Anspruchs gelöst. Weiter Vorteile und Ausgestaltungen der Erfindung gehen aus den weiteren Ansprüchen und der Beschreibung hervor.

Erfindungsgemäß werden Stufen einer Reformierungseinheit in aufsteigender Reihenfolge bezogen auf eine Gasströmungsrichtung in der Reformierungseinheit mit Stufen einer Kohlenmonoxid-Entfernungseinheit in absteigender Reihenfolge bezogen auf die Gasströmungsrichtung eines Reformats in der Kohlenmonoxid-Entfernungseinheit, welches von der Reformierungseinheit zur Verfügung gestellt und der Kohlenmonoxid-Entfernungseinheit zugeführt ist, miteinander thermisch gekoppelt, wobei die Kopplung der Stufen über je ein wärmeleitendes Trennmedium erfolgt, so daß die Stufen der Reformierungseinheit und der Kohlenmonoxid-Entfernungseinheit jeweils in Wärmekontakt miteinander sind. Der besondere Vorteil der Erfindung besteht darin, daß die Temperaturen in der Reformierungseinheit bei Vollast eine gute Auslastung des eingesetzten Reformierungskatalysators ermöglicht. Die letzte gekoppelte Kohlenmonoxid-Entfernungseinheit weist nur noch eine geringe Kohlenmonoxid-Konzentration auf, wobei besonders vorteilhaft auch eine Kohlenmonoxid-Bildung durch eine sogenannte Reverse-Shift-Reaktion bei kleiner Last unterbunden werden kann. Ebenso sind durch die verbesserte Dynamik schnelle Lastwechsel bei großer Lastspreizung möglich.

In einer bevorzugten Ausführung der Erfindung ist die Gasströmungsrichtung in Reformierungseinheit und Kohlenmonoxid-Entfernungseinheit gleichsinnig.

Eine besonders bevorzugte Ausführung ist eine zweistufige Anordnung von Reformierungseinheit und Kohlenmonoxid-Entfernungseinheit. Günstig ist, als Kohlenmonoxid-Entfernungseinheit eine Kohlenmonoxid-Oxidationsstufe vorzusehen.

Besonders vorteilhaft ist dabei, die erste Stufe der Reformierungseinheit mit der zweiten Stufe der Kohlenmonoxid-Entfernungseinheit und die erste Stufe der Kohlenmonoxid-Entfernungseinheit mit der zweiten Stufe der Reformierungseinheit zu verbinden.

Besonders kompakt ist eine Anordnung von Reformierungseinheit und Kohlenmonoxid-Entfernungseinheit in einem gemeinsamen Gehäuse angeordnet. Dabei ist eine vorteilhafte Wärmekopplung zwischen den Modulen möglich.

Die Erfindung ist nachstehend anhand einer Zeichnung näher beschrieben, wobei
- Fig. 1: eine Prinzipdarstellung einer erfindungsgemäßen Anordnung und
- Fig. 2: eine Ausgestaltung einer erfindungsgemäßen Anordnung mit einem Gehäuse zeigt.

In einem üblichen Brennstoffzellensystem, bei dem die erfindungsgemäße Anordnung besonders vorteilhaft eingesetzt werden kann, wird flüssiger Kraftstoff, insbesondere ein Kohlenwasserstoff, in einem Verdampfer verdampft und einem Reformer zugeführt, in welchem aus dem Kraftstoff ein wasserstoffhaltiges Gas mit Beimengungen von Kohlenmonoxid gewonnen wird. Das Kohlenmonoxid wird in einer Gasreinigungsstufe weitgehend aus dem wasserstoffhaltigen Gas entfernt und das gereinigte Gas dem Anodenraum als Brenngas zugeführt. Die Erfindung ist jedoch nicht auf den Einsatz in einem derartigen speziellen Brennstoffzellensystem beschränkt.

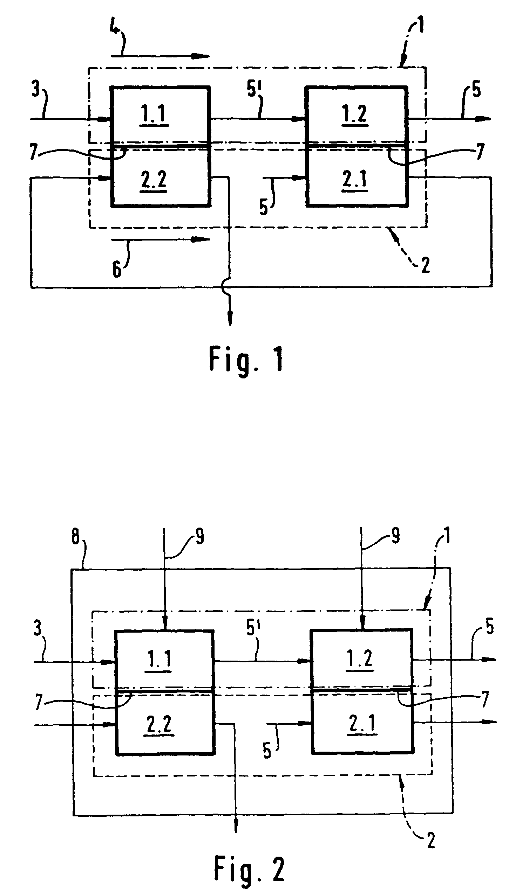

Die in Fig. 1 dargestellte Prinzipskizze einer erfindungsgemäßen Anordnung zeigt eine bevorzugte zweistufige Reformierungseinheit 1 mit Stufen 1.1 und 1.2 und einer bevorzugten zweistufigen Kohlenmonoxid-Entfernungseinheit 2 mit Stufen 2.1 und 2.2. Die mehrstufige Reformierungseinheit 1 und die mehrstufige Kohlenmonoxid-Entfernungseinheit 2 sind mit weiteren, nicht dargestellten Einheiten zum Betreiben einer Brennstoffzellenanlage in üblicher Weise verbunden. Eine übliche Luftzudosierung zu der Kohlenmonoxid-Entfernungseinheit 2 ist nicht gesondert dargestellt. Üblicherweise bildet das Reformat 5 am Ausgang der letzten Stufe 1.2 der Reformierungseinheit 1 ein kohlenmonoxidhaltiges Medium 5, welches die Kohlenmonoxid-Entfernungseinheit 2 durchströmt.

Bei mehr als zweistufigen Reformierungseinheiten und/oder Kohlenmonoxid-Entfernungseinheiten wird entsprechend bevorzugt die erste Stufe der Reformierungseinheit mit der letzten Stufe der Kohlenmonoxid-Entfernungseinheit und die jeweils dazwischen angeordneten Stufen der Reformierungseinheit ihrer Reihenfolge bezogen auf die Gasströmungsrichtung nach mit den jeweiligen Stufen der Kohlenmonoxid-Entfernungseinheit in analoger Reihenfolge und Weise thermisch gekoppelt.

In der Reformierungseinheit 1 strömt ein kohlenwasserstoffhaltiges Medium 3 in eine Richtung 4 durch die Einheit 1 und in der Kohlenmonoxid-Entfernungseinheit 2 strömt ein kohlenmonoxidhaltiges Reformat 5 in eine Richtung 6 durch die Einheit 2. Die jeweilige Strömungsrichtung ist in der Figur nur für eine gekoppelte Stufe mit einer ersten Stufe der Reformierungseinheit 1 und einer zweiten Stufe der Kohlenmonoxid-Entfernungseinheit 2 angegeben.

Vorzugsweise ist die zweite Stufe 1.2 der Reformierungseinheit 1 mit der ersten Stufe 2.1 der Kohlenmonoxid-Entfernungseinheit 2 und die erste Stute 1.1 der Reformierungseinheit 1 mit der zweiten Stufe 2.2 der Kohlenmonoxid-Entfernungseinheit 2 thermisch gekoppelt, wobei die Kopplung über ein Trennmedium 7 erfolgt, welches einen Wärmekontakt zwischen den gekoppelten Stufen 1.2 und 2.1 bzw. 1.1 und 2.2 ermöglicht. Das Reformat zwischen zwei aufeinander folgenden Stufen 1.1, 1.2 der Reformierungseinheit wird mit 5' bezeichnet. Das kohlenwasserstoffhaltige Medium 3 weist vorzugsweise ein Wasser/Kohlenwasserstoff-Gemisch auf.

Durch die Kopplung der zweiten Kohlenmonoxid-Entfernungseinheitsstufe 2.2 mit der ersten Stufe 1.1 der Reformierungseinheit 1 wird erreicht, daß die Ausgangstemperatur der zweiten Stufe 2.2 der Kohlenmonoxid-Entfernungseinheit 2 niedrig ist, da durch die endotherme Reaktion in der ersten Reformierungsstufe 1.1 die Reaktortemperatur am Ausgang der Kohlenmonoxid-Entfernungseinheit 2 durch die thermische Kopplung deutlich abgesenkt wird. Dies ergibt eine vorteilhafte niedrige Kohlenmonoxid-Austrittskonzentration der Kohlenmonoxid-Entfernungseinheit 2.

Das entstehende Temperaturprofil läßt sich über eine Luftzudosierung in der Kohlenmonoxid-Entfernungseinheit 2 weitgehend lastunabhängig einstellen. Somit läßt sich eine hohe Dynamik des Systems erreichen. Prinzipiell kann eine Luftzudosierung auch an jeder Stufe 2.1, 2.2 der Kohlenmonoxid-Entfernungseinheit 2 individuell eingestellt werden. Diese zusätzliche Maßnahme ist in der Figur nicht dargestellt.

Eine bevorzugte Verschaltung des Systems ist im Gleichstrom, so daß Reformierungseinheit 1 und Kohlenmonoxid-Entfernungseinheit 2 in gleicher Richtung von der jeweiligen Gasströmung durchströmt werden. Dabei bildet das Reformat 5 am Ausgang der letzten Reformierungsstufe 1.2 das kohlenmonoxidhaltige Medium 5, welches der Kohlenmonoxid-Entfernungseinheit 2 an deren ersten Stufe 2.1 am Eingang zugeführt wird.

Die zweite Reformierungsstufe 1.2 wird vorzugsweise mit der ersten Kohlenmonoxid-Entfernungsstufe 2.1 gekoppelt, um den Restumsatz des Kohlenwasserstoffs 3 im Reformer 1 zu erreichen. Da in dieser Stufe eine höhere Reaktortemperatur gefahren werden kann, wird der Reformierungskatalysator 9 optimal ausgenutzt. Die höhere Reaktortemperatur ist auch für den Umsatz der hohen Kohlenmonoxid-Konzentration in der ersten Kohlenmonoxid-Entfernungseinheitsstufe 2.1 von Vorteil.

Das Temperaturprofil in dieser Stufe kann auch bei Teillast hoch bleiben, so daß dieses ebenfalls weitgehend lastunabhängig einstellbar ist. Auch in diesen beiden Stufen 1.2, 2.1 findet die Durchströmung vorzugsweise im Gleichstrom statt. Die zudosierte Luftmenge in die beiden Kohlenmonoxid-Entfernungsseinheitsstufen 2.1, 2.2 wird vorzugsweise so gewählt, daß sie für einen vollständigen Umsatz des zugeführten Kohlenwasserstoffs ausreicht. Ein bevorzugter Kohlenwasserstoff ist Methanol oder Benzin.

Prinzipiell ist es möglich, zur Erreichung eines günstigen Temperaturprofils und eines möglichst optimalen Kohlenwasserstoff-Umsatzes jeweils die ersten Stufen von Kohlenmonoxid-Entfernungseinheit 2 und Reformierungseinheit 1 und die zweiten Stufen miteinander thermisch zu koppeln und die Durchströmung der Kohlenmonoxid-Entfernungseinheit 2 und/oder der Reformierungseinheit 1 jeweils gegensinnig vorzunehmen. Dies ist nicht in der Figur enthalten.

Werden die Reformierungseinheit 1 und die Kohlenmonoxid-Entfernungseinheit 2 in einem gemeinsamen Gehäuse 8 angeordnet, so ist ein sehr kompakter Aufbau der Anordnung möglich. Das gemeinsame Gehäuse 8 ist in Fig. 2 angedeutet.

Eine weitere vorteilhafte Weitergestaltung der erfindungsgemäßen Anordnung in Fig. 1 besteht darin, in diejenige Stufe 1.1 der Reformierungseinheit 1, welcher mit der letzten Stufe 2.2 der Kohlenmonoxid-Entfernungseinheit 2 gekoppelt ist, einen geringeren Anteil an einem Reformierungskatalysator 9 vorzusehen als in derjenigen Stufe 1.2, welche mit der ersten Stufe 2.1 der Kohlenmonoxid-Entfernungseinheit 2 gekoppelt ist. Die Maßnahme wirkt sich besonders günstig auf das Temperaturprofil der Anordnung und somit auch auf die Umsetzung des Kohlenwasserstoffs und die Kohlenmonoxid-Entfernung aus. Das Temperaturprofil soll dort möglichst homogen an allen Lastpunkten sein, das Temperaturprofil soll im Idealfall dort möglichst auf gleicher Höhe sein oder sich zumindest im Betrieb nicht verändern.

Jede der einzelnen Weitergestaltungen kann als einzelne Maßnahme vorteilhaft oder auch in Kombination mit einer oder mehreren der anderen genannten Maßnahmen günstig sein.

## Patentansprüche

1. Anordnung zur Erzeugung eines wasserstoffhaltigen Gases aus einem kohlenwasserstoffhaltigen Medium mit einer mehrstufigen, ein Reformat (5) zur Verfügung stellenden Reformierungseinheit (1), welche mit einer mehrstufigen Kohlenmonoxid-Entfernungseinheit (2) verbunden ist, wobei die Reformierungseinheit (1) bzw. die Kohlenmonoxid-Entfernungseinheit (2) jeweils in einer Gasströmungsrichtung vom kohlenwasserstoffhaltigen Medium (3) bzw. vom Reformat (5) durchströmt ist, wobei Stufen (1.1, 1.2) der Reformierungseinheit (1) in aufsteigender Reihenfolge bezogen auf die Gasströmungsrichtung (4) in der Reformierungseinheit (1) mit Stufen (2.1, 2.2) der Kohlenmonoxid-Entfernungseinheit (2) in absteigender Reihenfolge bezogen auf die Gasströmungsrichtung (6) in der Kohlenmonoxid-Entfernungseinheit (2) über je ein wärmeleitendes Trennmedium (7) in Wärmekontakt stehen,
dadurch gekennzeichnet,
daß die Kohlenmonoxid-Entfernungseinheit (2) eine Oxidationseinheit für Kohlenmonoxid ist.

2. Anordnung nach Anspruch 1,
dadurch gekennzeichnet,
daß die Gasströmungsrichtung (4, 6) in Reformierungseinheit (1) und Kohlenmonoxid-Entfernungseinheit (2) gleichsinnig ist.

3. Anordnung nach Anspruch 1,
dadurch gekennzeichnet,
daß die Reformierungseinheit (1) und die Kohlenmonoxid-Entfernungseinheit (2) jeweils zweistufig ausgebildet sind.

4. Anordnung nach Anspruch 3,
dadurch gekennzeichnet,
daß die erste Stufe (1.1) der Reformierungseinheit (1) mit der zweiten Stufe (2.2) der Kohlenmonoxid-Entfernungseinheit (2) und die erste Stufe (2.1) der Kohlenmonoxid-Entfernungseinheit (2) mit der zweiten Stufe (1.2) der Reformierungseinheit (1) verbunden ist.

5. Anordnung nach Anspruch 1,
dadurch gekennzeichnet,
daß die Reformierungseinheit (1) und die Kohlenmonoxid-Entfernungseinheit (2) in einem gemeinsamen Gehäuse (10) angeordnet sind.

6. Anordnung nach Anspruch 1,
dadurch gekennzeichnet,
daß diejenige Stufe (1.1) der Reformierungseinheit (1), welche mit der letzten Stufe (2.2) der Kohlenmonoxid-Entfernungseinheit (2) gekoppelt ist, einen geringeren Anteil an einem Reformierungskatalysator (9) aufweist als diejenige Stufe (1.2), welche mit der ersten Stufe (2.1) der Kohlenmonoxid-Entfernungseinheit (2) gekoppelt ist.
